# EUROPÄISCHE PATENTSCHRIFT

(11) **EP 0 927 326 B1**
(45) Veröffentlichungstag und Bekanntmachung des Hinweises auf die Patenterteilung: **22.11.2000**
(21) Anmeldenummer: 97942923.0
(22) Anmeldetag: 13.09.1997
(51) Int. Cl.: F25B 37/00, F28C 3/08

(54) **WÄRMETAUSCHVERFAHREN UND WÄRMETAUSCHER**
HEAT TRANSFERRING METHOD AND HEAT EXCHANGER
PROCEDE D'ECHANGE THERMIQUE ET ECHANGEUR DE CHALEUR

(30) Priorität: 17.09.1996 DE 19637821
(43) Veröffentlichungstag der Anmeldung: 07.07.1999
(73) Patentinhaber: Deutsches Zentrum für Luft- und Raumfahrt e.V., 53111 Bonn (DE); Schmidt-Bretten GmbH, 75015 Bretten (DE)
(72) Erfinder: PETER, Thomas, D-74219 Möckmühl (DE); SANDER, Heinz, D-74189 Weinsberg (DE); STECK, Andreas, D-74196 Neuenstadt (DE); TREFFINGER, Peter, D-74670 Forchtenberg (DE); GUO, Zhangeng, D-70437 Stuttgart (DE)
(74) Vertreter: Hoeger, Stellrecht & Partner
(86) Internationale Anmeldenummer: EP9705020
(87) Internationale Veröffentlichungsnummer: WO9812487

(56) Entgegenhaltungen:
- EP-A- 0 129 272
- FR-A- 2 492 067
- FR-A- 2 570 172
- US-A- 4 127 009
- US-A- 4 285 211
- US-A- 4 702 085
- US-A- 5 046 321

## Beschreibung

Die Erfindung betrifft ein Wärmetauschverfahren, bei welchem ein dampfförmiges Kältemedium durch ein flüssiges Lösungsmittel absorbiert wird und die dabei entstehende Wärme in einem Wärmeübertrager durch ein Wärmeübertragungsmedium abgeführt wird, welches nicht in Stoffaustausch mit dem Kältemedium und dem Lösungsmittel steht.

Ferner betrifft die Erfindung einen Wärmetauscher, bei welchem ein dampfförmiges Kältemedium durch ein flüssiges Lösungsmittel absorbiert wird und die dabei entstehende Wärme durch ein Wärmeübertragungsmedium abgeführt wird, welches nicht in Stoffaustausch mit dem Kältemedium und dem Lösungsmittel steht, umfassend eine Zuführungsleitung für das Lösungsmittel, einen Wärmeübertrager, der von dem Wärmeübertragungsmedium durchströmt ist, und eine Zuführungsleitung für das Kältemedium.

Derartige Wärmetauschverfahren und Wärmetauscher sind aus dem Stand der Technik bekannt.

Bei der Absorption des dampfförmigen Kältemediums durch ein flüssiges Lösungsmittel an dessen Oberfläche entstehen Kondensations- und Lösungswärme, die von einem Wärmeübertragungsmedium abgeführt werden können. Damit der Stoffaustausch zwischen dem flüssigen Lösungsmittel und dem Kältemediumdampf auf effektive Weise erfolgt, muß eine große Kontakt-Oberfläche zwischen den beiden Phasen des Arbeitsstoffpaars, bei dem es sich beispielsweise um das Arbeitsstoffpaar Ammoniak / Wasser handeln kann, vorhanden sein.

Bei einem beispielsweise aus der DE 3 441 016 bekannten Rieselfilmabsorber wird eine große Kontakt-Oberfläche dadurch erzielt, daß das Lösungsmittel längs der Außenwände von Kühlflächen (beispielsweise Platten oder Rohre) fließt. Das dampfförmige Kältemedium wird durch den dabei entstehenden Lösungsmittelfilm absorbiert. Es entstehen jedoch Probleme, da eine möglichst gleichmäßige Verteilung der Lösungsmittelflüssigkeit an Kühlflächen des Absorbers erforderlich ist und ein Abreißen des Lösungsmittelfilms auf den Kühlflächen zu einem verminderten Absorptionswirkungsgrad führt.

Bei einem bekannten Blasen- oder Tauchabsorber wird der Kältemedium-Dampf feinverteilt dem flüssigen Lösungsmittel zugeführt. Die stoffaustauschende Kontaktfläche wird durch Dampfblasen im Lösungsmittel erzielt. Nachteilig für diese Vorrichtung ist, daß zwischen den Kühlflächen des Wärmeübertragers eine große Flüssigkeitsmenge gespeichert werden muß und daß die in dem flüssigen Lösungsmittel aufsteigenden Dampfblasen eine Durchmischung der Lösungsmittelflüssigkeit bewirken können, wodurch der Wirkungsgrad der Vorrichtung verschlechtert wird. Außerdem tritt durch die Dispergierung des Kältemedium-Dampfs ein Druckverlust in der Lösungsmittelflüssigkeit auf.

Aus der US 4 285 211 ist ein Absorptionskühlsystem bekannt, das einen Absorber umfaßt, bei dem ein Lösungsmittelfilm mittels Sprühdüsen erzeugt wird.

Der vorliegenden Erfindung liegt daher die Aufgabe zugrunde, ein Wärmetauschverfahren und einen Wärmetauscher der eingangs genannten Art zu schaffen, bei dem gegenüber bekannten Wärmetauschverfahren und Wärmetauschern ein hoher Wirkungsgrad mit guter Stabilität erzielt wird.

Diese Aufgabe wird bei dem erfindungsgemäßen Wärmetauschverfahren mit den Merkmalen des Oberbegriffes von Anspruch 1 dadurch gelöst, daß das Lösungsmittel in einer Kältemediumdampf-Atmosphäre in einen Tropfennebel versprüht wird, in welcher eine im wesentlichen adiabate Sprühabsorption von Kältemedium durch die Lösungsmitteltropfen stattfindet, wobei der mittlere Tropfendurchmesser in dem Tropfennebel des versprühten Lösungsmittels kleiner ist als ungefähr 0,3 mm, und daß der Tropfennebel des versprühten Lösungsmittels dem Wärmeübertrager, welcher von dem Wärmeübertragungsmedium durchströmt ist, zur Abkühlung und zur weiteren Absorption von Kältemedium durch das Lösungsmittel zugeführt wird.

Das erfindungsgemäße Konzept bietet den Vorteil, daß durch die im wesentlichen adiabate Sprühabsorption im Sprühraum eine Vorabsorptionsstufe bereitgestellt ist, die keine Kühlflächen benötigt. Aufgrund dieser Vorabsorptionsstufe reduziert sich die hinsichtlich der Gesamtabsorption benötigte Wärmeübertragerfläche, so daß eine kompakte Bauweise eines mit dem erfindungsgemäßen Verfahren betriebenen Wärmeübertragers ermöglicht ist.

Durch die Erzeugung eines Tropfennebels kann eine gleichmäßige Verteilung der flüssigen Phase auf Kühlflächen des Wärmeübertragers erreicht werden, so daß ein Rieselfilm mit großer freier Oberfläche für den Stoffaustausch mit dem dampfförmigen Kältemedium geschaffen wird.

Weiterhin ist durch das erfindungsgemäße Konzept der Druckverlust in der Strömung des Kältemitteldampfes gering.

Ein guter Wirkungsgrad wird erreicht, wenn der mittlere Tropfendurchmesser in dem Tropfennebel des versprühten Lösungsmittels kleiner ist als ungefähr 0,3 mm, insbesondere wenn als Lösungsmittel Wasser und als Kältemedium Ammoniak verwendet ist. Sind die Tropfen zu groß, dann weisen sie ein ungünstiges, d.h. zu kleines, Oberflächen-Volumen-Verhältnis auf.

Vorteilhafterweise schlägt sich das Lösungsmittel an Kühlflächen des Wärmeübertragers nieder und insbesondere bildet sich an Kühlflächen des Wärmeübertragers ein Lösungsmittelfilm. Dadurch ist eine gleichmäßige Verteilung des flüssigen Lösungsmittels auf den Kühlflächen erreichbar, so daß eine große freie Oberfläche zum Stoffaustausch mit der Dampfphase bereitgestellt ist. Dadurch lassen sich durch das erfindungsgemäße Verfahren auch konventionelle Plattenwärmeübertrager und insbesondere Rieselfilm-Absorber als Absorber mit hohem Absorptionswirkungsgrad einsetzen, da die Stabilität des Rieselfilms verbessert ist.

In einer besonders günstigen Ausgestaltung des erfindungsgemäßen Verfahrens wird das Wärmeübertragungsmedium im Wärmeübertrager im Gegenstrom zum Lösungsmittelfluß im Wärmeübertrager geführt. Dadurch kann eine gute Anreicherung des Lösungsmittels mit dem Kältemedium erzielt werden, da auf diese Weise entlang des Lösungsmittelflusses ein für den Absorptionsvorgang vorteilhaftes Partialdruckgefälle zwischen Lösungsmittelflüssigkeit und Kältemediumdampf erzeugbar ist.

Vorteilhafterweise ist der Tropfennebel des versprühten Lösungsmittels monodispers, d.h. die Lösungsmitteltropfen weisen einen mittleren Tropfendurchmesser mit scharfer Häufigkeitsverteilung auf, so daß die für das jeweilige verwendete Arbeitsstoffpaar zur Erzielung eines hohen Wirkungsgrades optimale Tropfengröße einen hohen Anteil im Tropfennebel aufweist.

Zur Erzielung eines relevanten Wirkungsgrades ist es vorteilhaft, wenn als Lösungsmittel Wasser und als Kältemedium Ammoniak verwendet ist.

Zur Erzielung eines optimalen Wirkungsgrades ist es insbesondere vorteilhaft, wenn der mittlere Tropfendurchmesser in dem Tropfennebel des versprühten Lösungsmittels kleiner ist als ungefähr 0,1 mm.

Der Tropfennebel des versprühten Lösungsmittels kann in einem Sprühraum erzeugt werden, welcher bezogen auf die Schwerkraftrichtung oberhalb des Wärmeübertragers angeordnet ist. Dadurch wird gewährleistet, daß im wesentlichen alle Tropfen dem Wärmeübertrager zugeführt werden, und damit eine große Kontakt-Oberfläche für den Stoffaustausch erzielt wird.

Vorteilhafterweise wird ein Strom an dampfförmigem Kältemedium zur Erzeugung einer Kältemediumdampf-Atmosphäre in den Sprühraum geführt. Dadurch wird ein intensiver Kontakt des Kältemediums mit dem Tropfennebel des Lösungsmittels im Sprühraum erreicht.

In einer Variante einer Ausführungsform des erfindungsgemäßen Verfahrens wird der Strom an dampfförmigem Kältemedium von dem Sprühraum zum Wärmeübertrager geführt. Dadurch können die Tropfen zusätzlich zur Schwerkraft durch den Kältemediumstrom dem Wärmeübertrager zugeführt werden.

In einer alternativen Ausführungsform ist es vorgesehen, daß der Strom an dampfförmigem Kältemedium von dem Wärmeübertrager zum Sprühraum geführt wird. Besonders vorteilhaft ist es, wenn der Strom an dampfförmigem Kältemedium im Wärmeübertrager im Gegenstrom zum Lösungsmittelfluß im Wärmeübertrager ist. In diesem Falle ist ein höheres Partialdruckgefälle zwischen dem Lösungsmittelstrom und dem Kältemittelstrom, welches die Absorptionsfähigkeit des Lösungsmittels für das Kältemedium erhöht, erreicht, da im Wärmeübertrager eine höhere Konzentration an Kältemediumdampf auf mit höherer Konzentration an Kältemedium angereichertem Lösungsmittel trifft.

In einer besonders günstigen Ausführungsform ist das Wärmeübertragungsmedium in den wärmeübertragenden Elementen des Wärmeübertragers mäanderförmig geführt, so daß Wärme von einer großen Fläche der wärmeübertragenden Elemente aufgenommen werden kann.

Es ist dann vorteilhaft, wenn das Wärmeübertragungsmedium eine Strömungskomponente entgegen der Lösungsmittelfluß-Richtung im Wärmeübertrager aufweist, so daß ein hoher Absorptionswirkungsgrad erreicht ist.

Bei einem Wärmetauscher mit den Merkmalen des Oberbegriffes von Anspruch 15 wird die der Erfindung zugrundeliegende Aufgabe dadurch gelöst, daß die Zuführungsleitung für das Lösungsmittel in einen Sprühraum mündet, welcher bezogen auf eine Lösungsmittelfluß-Richtung vor dem Wärmeübertrager angeordnet ist, daß die Mündung der Zuführungsleitung für das Lösungsmittel eine Düse aufweist, durch welche das Lösungsmittel im Sprühraum in einen Tropfennebel versprühbar ist, bei dem die Lösungsmitteltropfen einen mittleren Tropfendurchmesser mit scharfer Häufigkeitsverteilung aufweisen, und daß zur Erzeugung einer Kühlmediumdampf-Atmosphäre dem Sprühraum Kältemedium zuführbar ist.

Der erfindungsgemäße Wärmeübertrager bietet somit die bereits im Zusammenhang mit dem erfindungsgemäßen Wärmetauschverfahren nach Anspruch 1 angegebenen Vorteile. Die Düse erzeugt einen Tropfennebel, der monodispers ist, so daß die zur Erzielung eines optimalen Wirkungsgrades des Wärmetauschers erforderliche Tropfengröße in dem Tropfennebel mit einer hohen Häufigkeit vorliegt.

Bei einer Variante einer erfindungsgemäßen Vorrichtung mündet die Zuführungsleitung für das Kältemedium in den Sprühraum. Dadurch wird ein intensiver Stoffaustausch zwischen Kältemedium und Lösungsmittel erreicht. Außerdem sorgt der Kältemedium-Strom dafür, daß die Lösungsmitteltropfen dem Wärmeübertrager zugeführt werden.

Bei einer zur Erzielung eines hohen Absorptionswirkungsgrades besonders vorteilhaften Variante einer Ausführungsform des erfindungsgemäßen Verfahrens ist es vorgesehen, daß die Zuführungsleitung für das Kältemedium in ein dem Sprühraum abgewandtes Ende des Wärmeübertragers mündet. Dadurch ist es ermöglicht, daß die Lösungsmittelflüssigkeit im Wärmeübertrager und das Kältemedium im Wärmeübertrager im Gegenstrom führbar sind, so daß zur Erreichung einer guten Absorption des Kältemediumdampfes durch die Lösungsmittelflüssigkeit optimales Partialdruckgefälle zwischen den beiden Medien erzeugbar ist.

Auf konstruktiv besonders einfache Weise wird ein hoher Stoffaustausch zwischen dem Lösungsmittel und dem Kältemedium erreicht, wenn der Sprühraum bezogen auf die Schwerkraftrichtung oberhalb des Wärmeübertragers angeordnet ist, so daß im wesentlichen alle Lösungsmitteltropfen des versprühten Lösungsmittels dem Wärmeübertrager zugeführt werden.

In einer konstruktiv besonders einfachen Ausführungsform des erfindungsgemäßen Wärmetauschers ist der Wärmeübertrager durch parallel in einem Abstand angeordnete Platten gebildet, durch welche das Wärmeübertragungsmedium strömt. Dadurch wird auch bei kleinem Apparatevolumen eine große Kühlfläche erzeugt, durch die das Wärmeübertragungsmedium die durch die Absorption des Kältemediums entstehende Kondensations- und Lösungswärme aufnehmen kann.

Die Platten, welche den Wärmeübertrager bilden, können eine Wellung aufweisen. Dadurch weist der Wärmeübertrager eine höhere Formstabilität und Druckbelastbarkeit auf. Außerdem wird, da die Gesamtfläche im Wärmeübertrager erhöht ist, eine Erhöhung der Wärmeübertragungsleistung bzw. eine kompaktere Bauweise erreicht.

Ein Wärmeübertrager kann auch aus in horizontaler Richtung in einem Abstand und in vertikaler Richtung in einem Abstand angeordneten Rohren, welche durch das Wärmeübertragungsmedium durchströmt werden, gebildet werden. Dadurch wird ein konstruktiv besonders einfacher Wärmeübertrager geschaffen. Insbesondere kann es auch vorgesehen sein, daß die Rohre in horizontaler Richtung liegen.

Vorteilhafterweise ist das Wärmeübertragungsmedium in der Nähe des der Düse abgewandten Endes des Wärmeübertragers in diesen einführbar und in der Nähe des der Düse zugewandten Endes diesem entnehmbar, wodurch eine optimale Übertragung gewährleistet ist, da ein Gegenstromprinzip realisiert ist.

Es ist denkbar, daß der Wärmetauscher einen Absorber einer Absorptionswärmepumpe bildet. Die Absorptionswärmepumpe weist dann die durch den erfindungsgemäßen Wärmetauscher erzielten Vorteile auf.

Vorteilhafterweise ist das zum Versprühen des Lösungsmittels durch die Düse erforderliches Druckgefälle in einem thermischen Verdichter in einem Lösungsmittelkreislauf erzeugbar, beispielsweise wenn der Wärmetauscher den Absorber eine Absorptionswärmepumpe bildet, so daß der konstruktive Aufwand erniedrigt ist.

Weitere Merkmale und Vorteile der Erfindung sind Gegenstand der nachfolgenden Beschreibung und zeichnerischen Darstellung von Ausführungsbeispielen.

In der Zeichnung zeigen:
- Fig. 1: ein erstes Ausführungsbeispiel eines Wärmetauschers;
- Fig. 2: ein Ausführungsbeispiel eines Wärmeübertragers;
- Fig. 3: ein weiteres Ausführungsbeispiel eines Wärmeübertragers;
- Fig. 4: eine schematische Darstellung eines Heiz- oder eines Kühlsystems, welches einen erfindungsgemäßen Wärmetauscher umfaßt und
- Fig. 5: ein zweites Ausführungsbeispiel eines erfindungsgemäßen Wärmetauschers.

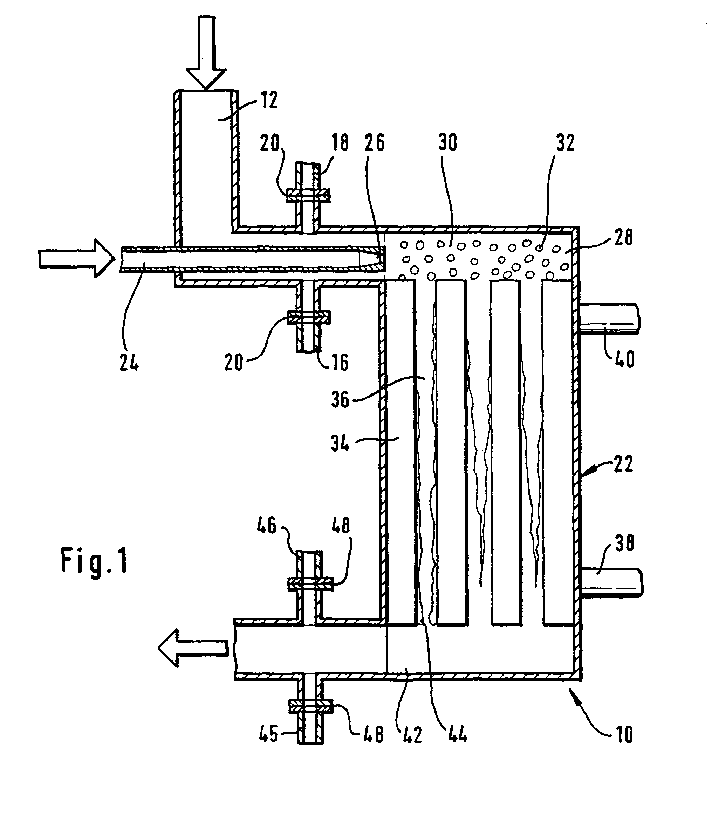

Ein als Ganzes mit 10 bezeichnetes Ausführungsbeispiel eines erfindungsgemäßen Wärmetauschers umfaßt, wie in Fig. 1 gezeigt, eine Zuführungsleitung 12 für ein dampfförmiges Kältemedium. Die Zuführungsleitung 12 weist Anschlüsse 16 und 18 mit zugehörigen Flanschverbindungen 20 auf.

Die Zuführungsleitung 12 für das Kältemedium führt zu einem Wärmeübertrager 22. In die Zuführungsleitung 12 für das Kältemedium 14 mündet in der in Fig. 1 gezeigten Variante eines Ausführungsbeispiels eine Zuführungsleitung 24 für ein flüssiges Lösungsmittel. An der Mündung der Zuführungsleitung 24 sitzt eine Düse 26.

Durch denjenigen Teil der Zuführungsleitung 12, der auf der Oberseite des Wärmeübertragers 22 zwischen der Düse 26 und einer Außenseite des Wärmeübertragers 22 angeordnet ist, wird ein Sprühraum 28 für ein durch die Düse 26 erzeugten Tropfennebel 30 von Lösungsmitteltropfen 32 gebildet. In der in Fig. 1 gezeigten Ausführungsform eines erfindungsgemäßen Wärmetauschers umfaßt der Sprühraum 28 denjenigen Teil der Zuführungsleitung 12, durch den das dampfförmige Kältemedium und die Lösungsmitteltropfen 32 dem Wärmeübertrager 22 zugeführt werden.

In der in Fig. 1 gezeigten Variante eines Ausführungsbeispieles umfaßt der Wärmeübertrager 22 parallel in einem Abstand angeordnete Platten 34. Zwischen den Platten sind quaderförmige Hohlräume gebildet, die einen Stoffaustauschraum 36 für die Absorption von Kältemedium durch das Lösungsmittel bilden. Bevorzugterweise beträgt der Abstand zwischen den Platten 34 2 bis 4 mm.

Durch die Platten 34 fließt ein Wärmeübertragungsmedium. Mittels eines Eintritts 38, welcher in der Nähe des dem Sprühraum 28 abgewandten Endes des Wärmeübertragers 22 liegt, wird kühles Wärmeübertragungsmedium in die Platten 34 des Wärmeübertragers 22 eingeführt. Das Wärmeübertragungsmedium durchströmt die Platten 34 und erwärmtes Wärmeübertragungsmedium wird dem Wärmeübertrager 22 an einem Austritt 40 entnommen.

An dem dem Sprühraum 28 abgewandten Ende des Wärmeübertragers 22 ist eine Leitung 42 angeordnet, welche mit dem Stoffaustauschraum 36 zwischen den Platten 34 des Wärmeübertragers 22 verbunden ist. Von den Platten 34 fließt die Lösung 44 von Lösungsmittel mit absorbiertem Kältemedium in die Leitung 42. Die Leitung 42 weist zusätzliche Anschlüsse 45 und 46 mit Flanschverbindungen 48 auf.

Durch die Düse 26 wird das flüssige Lösungsmittel in den Sprühraum 28 versprüht. In dem dabei entstehenden Tropfennebel 30 weisen die Lösungsmitteltropfen 32 mit scharfer Häufigkeitsverteilung einen mittleren Tropfendurchmesser auf, der durch die Charakteristik der Düse 26, insbesondere ihrer Form, bestimmt wird.

In dem Sprühraum 28 treffen die Lösungsmitteltropfen auf Kältemediumdampf. Durch das Versprühen des Lösungsmittels in dieser Kältemediumdampf-Atmosphäre bildet sich im Sprühraum 28 ein Zweiphasengebiet, in dem die Flüssigkeitsphase und die Dampfphase weitgehend homogen durchmischt sind. Aufgrund eines Partialdruckgradienten zwischen den Lösungsmitteltropfen und dem Kältemediumdampf absorbieren die Tropfen Kältemedium und zwar so lange, bis der Partialdruckgradient im wesentlichen abgebaut ist. Die durch die Kältemediumabsorption entstehende Wärme kann von den Lösungsmitteltropfen nicht abgeführt werden, so daß die Sprühabsorption ein im wesentlichen adiabater Vorgang ist und Tropfen und Dampf sich erwärmen. Typischerweise werden im Sprühraum 28 größenordnungsmäßig 25% des Kältemediums, bezogen auf die Gesamtabsorption des Kältemediums durch das Lösungsmittel im Wärmetauscher 10, absorbiert.

Aus dem Sprühraum 28 fallen die Lösungsmitteltropfen 32 des Tropfennebels 30 dem Wärmeübertrager 22 zu und gelangen in die Zwischenräume zwischen den Platten 34 des Wärmeübertragers 22.

In dem Stoffaustauschraum 36 schlagen die Lösungsmitteltropfen 32 sich an Kühlflächen der Platten 34 nieder und bilden einen Lösungsmittelfilm. Die Kondensations- und Lösungswärme wird durch das den Wärmeübertrager 22 durchströmende Wärmeübertragungsmedium abgeführt. Dadurch kühlt sich das Lösungsmittel ab, wodurch wiederum ein Partialdruckgradient zwischen der Lösungsmittelflüssigkeit und dem Kältemediumdampf entsteht, so daß der Lösungsmittelfilm Kältemedium absorbieren kann und die dabei entstehende Wärme durch das Wärmeübertragungsmedium abgeführt wird.

Das Lösungsmittel mit dem absorbierten Kältemedium fließt entlang von Oberflächen der Platten 34 in vertikaler Richtung ab. Dadurch wird der Flüssigkeitsfilm auf den Oberflächen der Platten 34 im Wärmeübertrager 22 in Richtung zu der Leitung 42 dicker.

In vertikaler Richtung zur Leitung 42 hin nimmt die Dichte des Lösungsmittels ab, da in diesem immer mehr Kältemedium gelöst ist. Dadurch wiederum nimmt in der Nähe des der Leitung 42 zugewandten Endes des Wärmeübertragers 22 die Fähigkeit des Lösungsmittels ab, Kältemedium zu absorbieren.

Das durch den Eintritt 38 in den Wärmeübertrager 22 einströmende Wärmeübertragungsmedium wird beim Durchströmen der Platten 34 des Wärmeübertragers 22, welches in einer zum Fluß des Lösungsmittels in dem Stoffaustauschraum 36 entgegengesetzten Richtung erfolgt, in vertikaler Richtung bis zum Austritt 40 zunehmend erwärmt.

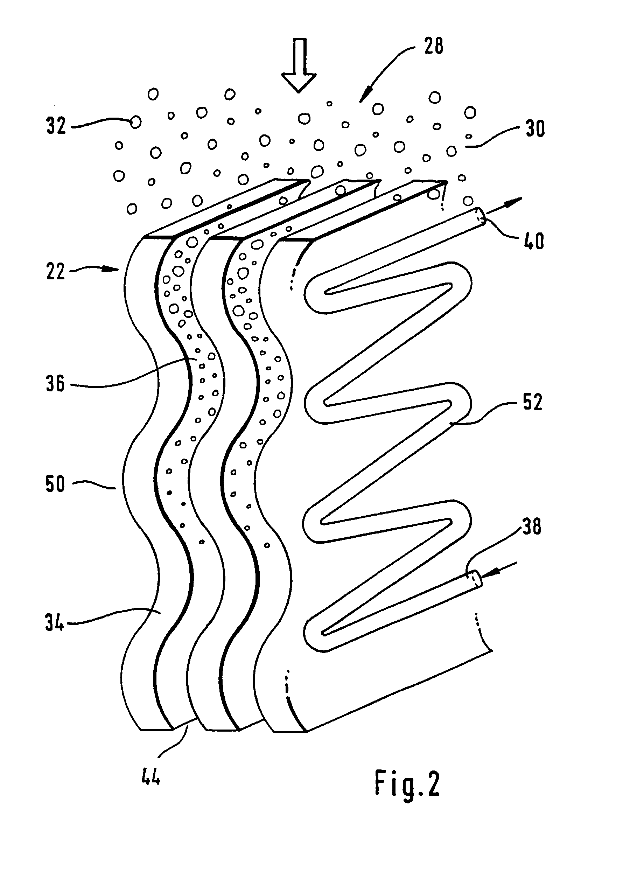

Die Platten 34 des Wärmeübertragers 22 können in einer Variante einer Ausführungsform, wie in Fig. 2 gezeigt, eine Wellung 50 aufweisen, die insbesondere kreisförmig oder sinusförmig sein kann. Die Platten 34 weisen dadurch eine größere Kühlfläche auf.

In den Platten 34 verlaufen zwischen dem Eintritt 38 und dem Austritt 40 Leitungen 52 für das Wärmeübertragungsmedium. Die Leitungen 52 liegen mäanderförmig, so daß das Wärmeübertragungsmedium in vertikaler Richtung entgegen der Schwerkraftrichtung nach oben strömt und gleichzeitig eine große Fläche der Platten 34 durchströmt wird. Die Leitungen 52 sitzen dicht unter der Oberfläche der Platten 34.

Die Anzahldichte der Lösungsmitteltropfen 32 nimmt im Stoffaustauschraum 36, wie in Fig. 2 angedeutet, vom Sprühraum 28 aus ab, weil sich die Lösungsmitteltropfen 32 an der Oberfläche der Platten 34 niederschlagen. Aus dem Stoffaustauschraum 36 strömt mit gelöstem Kältemedium angereichertes Lösungsmittel 44 in die Leitung 42.

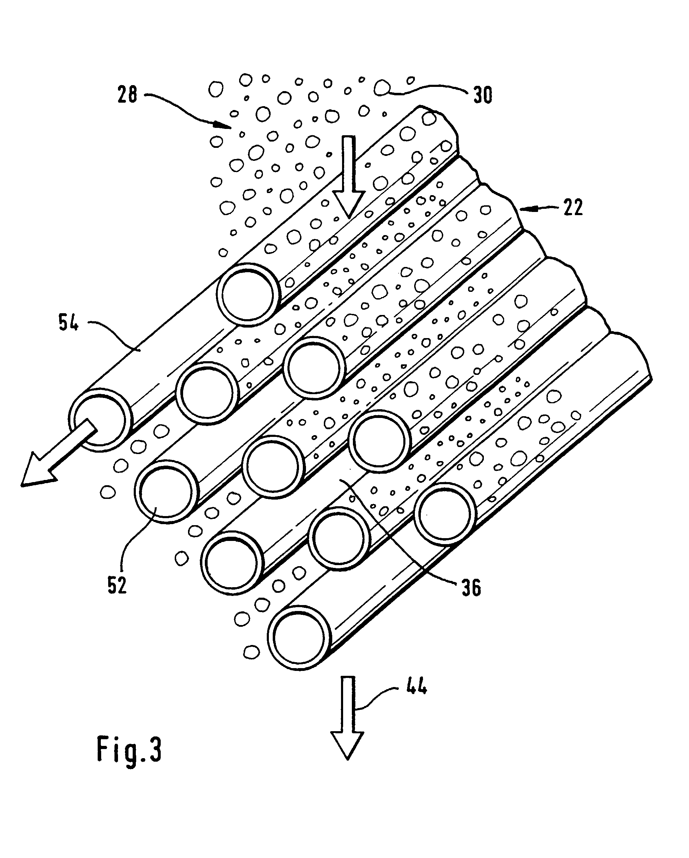

In einer weiteren Variante eines Ausführungsbeispieles ist, wie in Fig. 3 gezeigt, der Wärmeübertrager 22 durch parallel liegende Rohre 54 gebildet. Die Rohre 54 sind in vertikaler Richtung in einem Abstand angeordnet und in horizontaler Richtung in einem Abstand angeordnet.

Bei der in Fig. 3 gezeigten Variante ist eine Reihe von horizontal angeordneten Rohren 54 gegenüber einer benachbarten Reihe in horizontaler Richtung so versetzt, daß jeweils der Abstand zu zwei nächstliegenden Rohren 54 in der benachbarten Reihe gleich groß ist. Dadurch wird erreicht, daß die Lösungsmitteltropfen 32 beim Durchgang durch den Wärmeübertrager 22 stets in Berührung kommen mit der Oberfläche eines Rohrs 54.

Die Rohre werden in horizontaler Richtung durch ein Wärmeübertragungsmedium durchströmt. Der Stoffaustauschraum 36 ist durch die freie Fläche zwischen den Rohren gebildet.

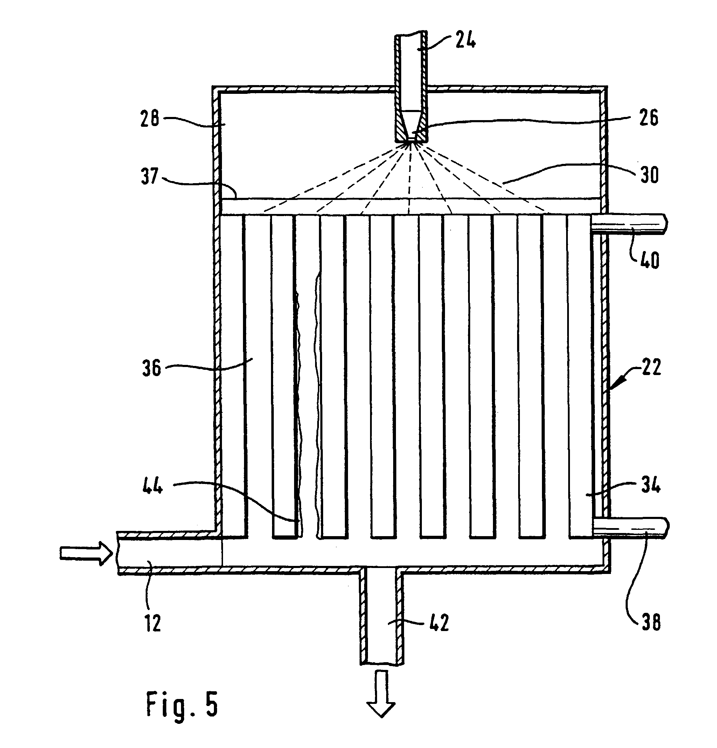

In einer Variante des Ausführungsbeispieles ist, wie in Fig. 5 gezeigt, die Zuführungsleitung 12 für das dampfförmige Kältemedium an einem dem Sprühraum 28 abgewandten Ende des Wärmeübertragers 22 angeordnet. Der Kältemediumdampf wird unter Druck dem Wärmeübertrager 22 zugeführt und strömt über den Stoffaustauschraum 36 dem Sprühraum 28 zu, um dort für die im wesentlichen adiabatische Sprühabsorption eine Kältemediumdampf-Atmosphäre zu schaffen.

Beim Eintritt des Kältemediumdampfes in den Wärmeübertrager 22 weist der Kältemediumdampf eine hohe Konzentration auf.

Bei Gegenströmung von Lösung und Kältemediumdampf kann die Lösung stärker mit Kältemedium angereichert werden, da in diesem Fall die Lösung am Austritt aus dem Wärmeübertrager 22 mit Kältemitteldampf höherer Konzentration in Kontakt kommt als im Falle des Gleichstroms von Lösung und Kältemedium-dampf. Dadurch wird der Absorptionswirkungsgrad erhöht.

Beim Zuströmen des Kältemediumdampfes durch den Stoffaustauschraum 36 zum Sprühraum 28 nimmt die Konzentration des Kältemediumdampfes ab, da dieser teilweise durch den Lösungsmittelfilm absorbiert wird. Wenn der Kältemediumdampfstrom in Richtung zum Sprühraum 28 gelangt, dann nimmt die Konzentration an Kältemedium im Lösungsmittelfilm ab, so daß stets ein Partialdruckgradient vorliegt und eine gute Absorptionsfähigkeit des Kältemediumdampfes durch das Lösungsmittel gewährleistet ist.

Es kann auch vorgesehen sein, daß der Sprühraum 28 eine Verteilvorrichtung 37 zur Zuführung von im Sprühraum 28 niedergeschlagenen Kältemedium zum Wärmeübertrager 22 aufweist. Durch diese Verteilvorrichtung wird gewährleistet, daß das niedergeschlagene Kältemedium dem Wärmeübertrager 22 gleichmäßig zugeführt wird. Dazu kann beispielsweise im Sprühraum 28 eine Rinne so angeordnet sein, daß an Wänden des Sprühraums 28 niedergeschlagenes flüssiges Kältemedium in die Rinne fließen kann und von der Rinne gleichmäßig verteilt dem Wärmeübertrager 22 zufließen kann. Die Rinne ist dabei so angeordnet, daß sie den Zugang des Kältemedium-Tropfennebels aus dem Sprühraum 28 zum Wärmeübertrager 22 nicht behindert.

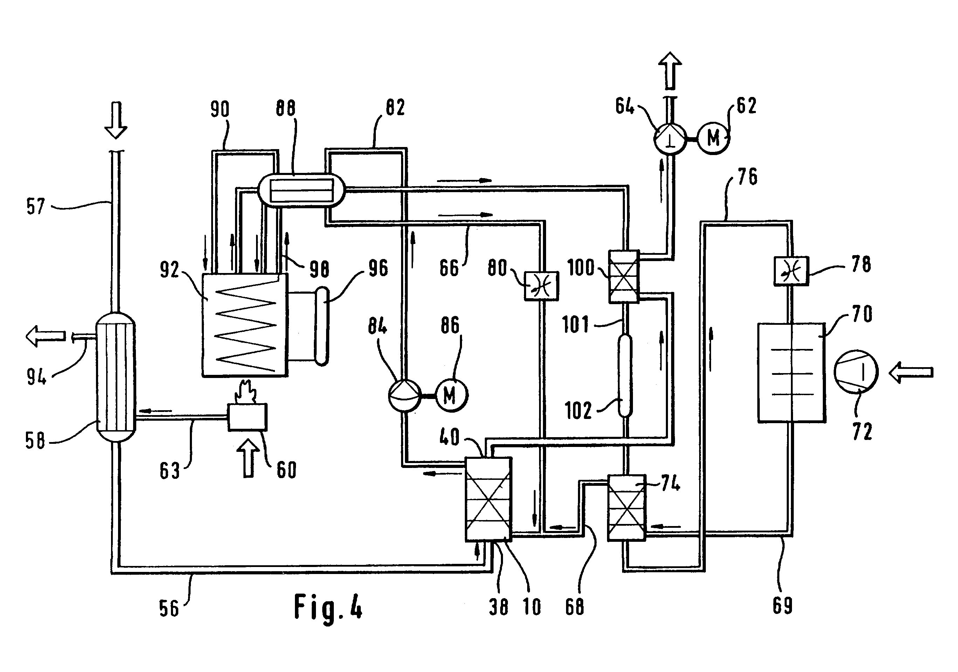

Der Wärmetauscher 10 kann, wie in Fig. 4 gezeigt, den Absorber eine Absorptionswärmepumpe bilden.

Als Wärmeübertragungsmedium wird mittels einer Leitung 56 dem Wärmetauscher 10 Heizwasser zugeführt. Vor dem Eintritt in den Wärmetauscher 10 wird das Heizwasser über eine weitere Leitung 57 einem Rauchgaswärmetauscher 58 zugeführt und dort vorgewärmt, wobei der Wärmetausch mit den Abgasen eines Brenners 60 erfolgt. Nach Durchlaufen des Wärmetauschers 10 ist das Heizwasser aufgeheizt und kann zu Heizzwecken benutzt werden. Der Heizwasserkreislauf weist eine durch einen Motor 62 angetriebene Pumpe 64 auf.

Mittels einer Leitung 66 wird dem Wärmetauscher 10 flüssiges Lösungsmittel zugeführt und mittels einer Leitung 68 dampfförmiges Kältemedium.

Das flüssige Kältemedium wird in einem Verdampfer 70 verdampft, wobei die hierzu erforderliche Verdampfungswärme beispielsweise der Außenluft entzogen wird, welche über einen Ventilator 72 dem Verdampfer 70 zugeführt wird. Das dampfförmige Kältemedium strömt über eine Leitung 69 zu einem Nachkühler 74 und vom Nachkühler 74 über die Leitung 68 zum Wärmetauscher 10. Das flüssige Kältemedium strömt vor dem Verdampfen ebenfalls durch den Nachkühler 74 und von dort über eine Leitung 76 dem Verdampfer 70 zu. In der Leitung 76 für das flüssige Kältemedium zwischen dem Nachkühler 74 und dem Verdampfer 70 ist ein Drosselventil 78 angeordnet. Der Nachkühler 74 dient zur Durchführung eines Wärmetauschs zwischen flüssigem und dampfförmigem Kältemedium. Dabei wird die Kältemediumflüssigkeit abgekühlt und ein dem Verdampfer 70 austretendes Zweiphasengemisch vollständig verdampft.

Mittels der Leitung 66 wird dem Wärmetauscher 10 flüssiges Lösungsmittel zugeführt. Die Leitung 66 umfaßt ein Drosselventil 80.

Durch eine Leitung 82, welche eine Fortsetzung der Leitung 42 des Wärmetauschers 10 darstellt, wird die Lösung, welche das Lösungsmittel mit dem gelösten Kältemedium umfaßt, über eine Pumpe 84 mit Motor 86 einem Lösungswärmeübertrager 88 mit integriertem Teilkondensator zugeführt und von dort mittels einer Leitung 90 einem Kocher 92, der durch den Brenner 60 beheizt wird.

Die Abgase des Brenners 60 werden über eine Leitung 63 dem Rauchgaswärmetauscher 58 zugeführt, durchlaufen diesen und werden dann über einen Austritt 94 des Rauchgaswärmetauschers 58 beispielsweise an einen Schornstein abgeführt.

Der Kocher 92 ist mit einem Lösungsmittelspeicher 96 verbunden. In dem Kocher 92 wird die Lösung erhitzt, so daß das Kältemedium ausdampft. Außerdem wird mittels einer Leitung 98 dem Lösungswärmeübertrager 88 mit integriertem Teilkondensator aus dem Kocher 92 flüssige Lösung zugeführt.

Im Lösungswärmeübertrager 88 wird die vom Wärmetauscher 10 kommende kältemediumreiche Lösung im Gegenstrom zu der vom Kocher 92 ausströmenden kältemediumarmen Lösung geführt. Er hat die Aufgabe, die kältemediumarme Lösung möglichst auf die Temperatur der zugeführten kältemediumreichen Lösung abzukühlen und letzere dabei zu erwärmen. Im integrierten Teilkondensator findet ebenfalls ein innerer Wärmeübertragungsvorgang statt. Hierbei wird der im Kocher 92 erzeugte Kältemediumdampf wiederum im Gegenstrom zur kältemediumreichen Lösung durch einen Wärmeübertrager geführt. Durch die Wärmeübertragung zwischen den beiden Fluidströmen wird einerseits die kältemediumreiche Lösung weiter erwärmt und andererseits der Kältemediumdampf abgekühlt. Letzeres erfolgt mit dem Ziel, die Kältemediumkonzentration des Dampfes durch Teilkondensation zu erhöhen.

Der aus dem Lösungswärmeübertrager 88 mit integriertem Teilkondensator austretende Lösungsmittelstrom ist arm an gelöstem Kältemedium und wird über die Leitung 66 direkt dem Wärmetauscher 10 zugeführt.

Der Kocher 92, der Lösungswärmeübertrager 88, die Pumpe 84, das Drosselventil 80 und der Wärmetauscher 10 bilden zusammen einen thermischen Verdichter, in welchem das erforderliche Druckgefälle durch den Verdampfungsvorgang im Kocher 92 mittels Zufuhr von Verbrennungsenergie erzeugt wird.

Der aus dem Lösungswärmeübertrager 88 mit integriertem Teilkondensator austretende Strom an gasförmigem Kältemedium wird einem Kondensator 100 zugeführt, in dem das Kältemedium kondensiert. Vorteilhafterweise ist der Strom des Heizwassers durch den Kondensator 100 geführt, so daß das Heizwasser durch die Kondensationswärme im Kondensator 100 zusätzlich aufgeheizt wird.

Das flüssige Kältemedium strömt vom Kondensator 100 über eine Leitung 101 in einen Kältemediumspeicher 102 und von dort in den Nachkühler 74.

Die Absorptionswärmepumpe weist eine Wärmequelle auf, an welcher durch den Wärmepumpvorgang eine Abkühlung auftritt. Als Wärmequelle kann die Umgebung (Außenluft, Erdreich, Grundwasser) dienen. Durch den Wärmepumpvorgang tritt an einer Wärmesenke eine Erwärmung auf. Dabei kann es sich beispielsweise um Heizkörper eines Gebäudes handeln. In dem Ausführungsbeispiel der Fig. 4 beaufschlagt die Wärmequelle den Verdampfer 70, die Wärmesenke ist beispielsweise der Heizwasserpumpe 64 nachgeordnet.

## Patentansprüche

1. Wärmetauschverfahren, bei welchem ein dampfförmiges Kältemedium durch ein flüssiges Lösungsmittel absorbiert wird und die dabei entstehende Wärme in einem Wärmeübertrager durch ein Wärmeübertragungsmedium abgeführt wird, welches nicht in Stoffaustausch mit dem Kältemedium und dem Lösungsmittel steht,
**dadurch gekennzeichnet**, daß das Lösungsmittel in einer Kältemediumdampf-Atmosphäre in einen Tropfennebel versprüht wird, in welcher eine im wesentlichen adiabate Sprühabsorption von Kältemedium durch die Lösungsmitteltropfen stattfindet, wobei der mittlere Tropfendurchmesser in dem Tropfennebel des versprühten Lösungsmittels kleiner ist als ungefähr 0,3 mm, und daß der Tropfennebel des versprühten Lösungsmittels dem Wärmeübertrager, welcher von dem Wärmeübertragungsmedium durchströmt ist, zur Abkühlung und zur weiteren Absorption von Kältemedium durch das Lösungsmittel zugeführt wird.

2. Wärmetauschverfahren nach Anspruch 1, dadurch gekennzeichnet, daß sich das Lösungsmittel an Kühlflächen des Wärmeübertragers niederschlägt.

3. Wärmetauschverfahren nach Anspruch 2, dadurch gekennzeichnet, daß sich an Kühlflächen des Wärmeübertragers ein Lösungsmittelfilm bildet.

4. Wärmetauscherverfahren nach einem der Ansprüche 1 bis 3, dadurch gekennzeichnet, daß das Wärmeübertragungsmedium im Wärmeübertrager im Gegenstrom zum Lösungsmittelfluß im Wärmeübertrager geführt wird.

5. Wärmetauschverfahren nach einem der voranstehenden Ansprüche, dadurch gekennzeichnet, daß der Tropfennebel des versprühten Lösungsmittels monodispers ist.

6. Wärmetauschverfahren nach einem der vorangehenden Ansprüche, dadurch gekennzeichnet, daß als Lösungsmittel Wasser und als Kältemedium Ammoniak verwendet wird.

7. Wärmetauschverfahren nach Anspruch 5 oder 6, dadurch gekennzeichnet, daß der mittlere Tropfendurchmesser in dem Tropfennebel des versprühten Lösungsmittels kleiner ist als ungefähr 0,1 mm, insbesondere wenn als Lösungsmittel Wasser und als Kältemedium Ammoniak verwendet ist.

8. Wärmetauschverfahren nach einem der vorangehenden Ansprüche, dadurch gekennzeichnet, daß der Tropfennebel des versprühten Lösungsmittels in einem Sprühraum erzeugt wird, welcher bezogen auf die Schwerkraftrichtung oberhalb des Wärmeübertragers angeordnet ist.

9. Wärmetauschverfahren nach Anspruch 8, dadurch gekennzeichnet, daß ein Strom an dampfförmigem Kältemedium zur Erzeugung einer Kältemediumdampf-Atmosphäre durch den Sprühraum geführt wird.

10. Wärmetauscherverfahren nach Anspruch 9, dadurch gekennzeichnet, daß der Strom an dampfförmigem Kältemedium von dem Sprühraum zum Wärmeübertrager geführt wird.

11. Wärmetauscherverfahren nach Anspruch 9, dadurch gekennzeichnet, daß der Strom an dampfförmigem Kältemedium von dem Wärmeübertrager zum Sprühraum geführt wird.

12. Wärmetauscherverfahren nach Anspruch 11, dadurch gekennzeichnet, daß der Strom an dampfförmigem Kältemedium im Wärmeübertrager in Gegenstrom zum Lösungsmittelfluß im Wärmeübertrager ist.

13. Wärmetauschverfahren nach einem der voranstehenden Ansprüche, dadurch gekennzeichnet, daß das Wärmeübertragungsmedium in den wärmeübertragenden Elementen des Wärmeübertragers mäanderförmig geführt ist.

14. Wärmetauschverfahren nach Anspruch 13, dadurch gekennzeichnet, daß das Wärmeübertragungsmedium eine Strömungskomponente entgegen der Lösungsmittelfluß-Richtung im Wärmeübertrager aufweist.

15. Wärmetauscher, bei welchem ein dampfförmiges Kältemedium durch ein flüssiges Lösungsmittel absorbiert wird und die dabei entstehende Wärme durch ein Wärmeübertragungsmedium abgeführt wird, welches nicht in Stoffaustausch mit dem Kältemedium und dem Lösungsmittel steht, umfassend eine Zuführungsleitung (24) für das Lösungsmittel, einen Wärmeübertrager (22), der von dem Wärmeübertragungsmedium durchströmt ist, und eine Zuführungsleitung (12) für das Kältemedium, dadurch gekennzeichnet, daß die Zuführungsleitung (24) für das Lösungsmittel in einen Sprühraum (28) mündet, welcher bezogen auf eine Lösungsmittelfluß-Richtung vor dem Wärmeübertrager (22) angeordnet ist, daß die Mündung der Zuführungsleitung (24) für das Lösungsmittel eine Düse (26) aufweist, durch welche das Lösungsmittel im Sprühraum (28) in einen Tropfennebel (30) versprühbar ist, bei dem die Lösungsmitteltropfen einen mittleren Tropfendurchmesser mit scharfer Häufigkeitsverteilung aufweisen, und daß zur Erzeugung einer Kältemediumdampf-Atmosphäre dem Sprühraum (28) das Kältemedium zuführbar ist.

16. Wärmetauscher nach Anspruch 15, dadurch gekennzeichnet, daß die Zuführungsleitung (12) für das Kältemedium in den Sprühraum (28) mündet.

17. Wärmetauscher nach Anspruch 15, dadurch gekennzeichnet, daß die Zuführungsleitung (12) für das Kältemedium in ein dem Sprühraum (28) abgewandtes Ende des Wärmeübertrages (22) mündet.

18. Wärmetauscher nach einem der Ansprüche 15 bis 17, dadurch gekennzeichnet, daß der Sprühraum (28) bezogen auf die Schwerkraftrichtung oberhalb des Wärmeübertragers (22) angeordnet ist.

19. Wärmetauscher nach einem der Ansprüche 15 bis 18, dadurch gekennzeichnet, daß der Wärmeübertrager (22) durch parallel in einem Abstand angeordnete Platten (34) gebildet ist, durch welche das Wärmeübertragungsmedium strömt.

20. Wärmetauscher nach Anspruch 19, dadurch gekennzeichnet, daß die Platten (34), welche den Wärmeübertrager (22) bilden, eine Wellung (50) aufweisen.

21. Wärmetauscher nach einem der Ansprüche 15 bis 18, dadurch gekennzeichnet, daß der Wärmeübertrager (22) aus in einem Abstand in horizontaler Richtung und in einem Abstand in vertikaler Richtung angeordneten Rohren (54), welche durch das Wärmeübertragungsmedium durchströmt werden, gebildet ist.

22. Wärmetauscher nach einem der Ansprüche 15 bis 21, dadurch gekennzeichnet, daß das Wärmeübertragungsmedium in der Nähe des der Düse (26) abgewandten Endes des Wärmeübertragers (22) in den Wärmeübertrager (22) einführbar ist und in der Nähe des der Düse (26) zugewandten Ende diesem entnehmbar ist.

23. Wärmetauscher nach einem der Ansprüche 15 bis 22, dadurch gekennzeichnet, daß der Wärmetauscher einen Absorber einer Absorptionswärmepumpe bildet.

24. Wärmetauscher nach Anspruch 23, dadurch gekennzeichnet, daß das zum Versprühen des Lösungsmittels durch die Düse (26) erforderliche Druckgefälle in einem thermischen Verdichter in einem Lösungsmittelkreislauf erzeugbar ist.

25. Wärmetauscher nach einem der Ansprüche 15 bis 24, dadurch gekennzeichnet, daß in dem Sprühraum (28) eine Verteilvorrichtung (37) zum gleichmäßigen Zuführen von im Sprühraum (28) niedergeschlagenen Kältemedium zum Wärmeübertrager (22) vorgesehen ist.

## Claims

1. A method of transferring heat in which a vaporous cooling medium is absorbed by a fluidic solvent and the heat ensuing thereby is led away in a heat transferring arrangement by means of a heat transfer medium which is not in mass-transferring relationship with the cooling medium or the solvent,
characterised in that the solvent is atomised into a mist of droplets in an atmosphere of the vaporous cooling medium wherein a substantially adiabatic spray-absorption process of the cooling medium by the droplets of the solvent takes place, whereby the average diameter of the droplets in the mist of droplets of the atomised solvent is less than approximately 0.3 mm, and in that the mist of droplets of the atomised solvent is fed to the heat transferring arrangement, through which the heat transfer medium flows, for the purposes of cooling and further absorption of the cooling medium by the solvent.

2. A method of transferring heat in accordance with Claim 1, characterised in that the solvent condenses onto the cooling surfaces of the heat transferring arrangement.

3. A method of transferring heat in accordance with Claim 2, characterised in that a film of solvent is formed on the cooling surfaces of the heat transferring arrangement.

4. A method of transferring heat in accordance with any of Claims 1 to 3, characterised in that the heat transferring medium in the heat transferring arrangement is caused to flow in the reverse direction to the flow of the solvent in the heat transferring arrangement.

5. A method of transferring heat in accordance with any of the preceding Claims, characterised in that the mist of droplets of the atomised solvent is a mono-dispersion.

6. A method of transferring heat in accordance with any of the preceding Claims, characterised in that water is used as the solvent and ammonia as the cooling medium.

7. A method of transferring heat in accordance with Claim 5 or 6, characterised in that the average diameter of the droplets in the mist of droplets of the atomised solvent is less than approximately 0.1 mm, especially when water is used as the solvent and ammonia as the cooling medium.

8. A method of transferring heat in accordance with any of the preceding Claims, characterised in that the mist of droplets of the atomised solvent is produced in an atomisation chamber which is disposed above the heat transferring arrangement with respect to the direction of gravitational force.

9. A method of transferring heat in accordance with Claim 8, characterised in that a stream of vaporous cooling medium is fed through the atomisation chamber for producing an atmosphere of the vaporous cooling medium.

10. A method of transferring heat in accordance with Claim 9, characterised in that the stream of vaporous cooling medium is fed from the atomisation chamber to the heat transferring arrangement.

11. A method of transferring heat in accordance with Claim 9, characterised in that the stream of vaporous cooling medium is fed from the heat transferring arrangement to the atomisation chamber.

12. A method of transferring heat in accordance with Claim 11, characterised in that the stream of vaporous cooling medium in the heat transferring arrangement flows in the opposite direction to the stream of solvent in the heat transferring arrangement.

13. A method of transferring heat in accordance with any of the preceding Claims, characterised in that the heat transferring medium is caused to flow along the heat transferring elements of the heat transferring arrangement in meandering fashion.

14. A method of transferring heat in accordance with Claim 13, characterised in that the heat transferring medium comprises a component of flow which is opposed to the direction of flow of the solvent.

15. A heat exchanger in which a vaporous cooling medium is absorbed by a fluidic solvent and the heat ensuing thereby is led away by means of a heat transfer medium which is not in mass-transferring relationship with the cooling medium or the solvent, comprising a supply conduit (24) for the solvent, a heat transferring arrangement (22) through which the heat transfer medium flows and a supply conduit (12) for the cooling medium, characterised in that the supply conduit (24) for the solvent enters an atomisation chamber (28) which is located prior to the heat transferring arrangement (22) with respect to the direction of flow of the solvent, in that the mouth of the supply conduit (24) for the solvent comprises a jet (26) by means of which the solvent is atomisable into a mist of droplets (30) in the atomisation chamber (28) whereby the droplets of the solvent will have an average diameter of finely defined frequency distribution, and in that the cooling medium is suppliable to the atomisation chamber (28) for the purposes of producing an atmosphere of the vaporous cooling medium.

16. A heat exchanger in accordance with Claim 15, characterised in that the supply conduit (12) for the cooling medium enters the atomisation chamber (28).

17. A heat exchanger in accordance with Claim 15, characterised in that the supply conduit (12) for the cooling medium enters the heat transferring arrangement (22) at an end thereof remote from the atomisation chamber (28).

18. A heat exchanger in accordance with any of the Claims 15 to 17, characterised in that the atomisation chamber (28) is disposed above the heat transferring arrangement (22) with respect to the direction of gravitational force.

19. A heat exchanger in accordance with any of the Claims 15 to 18, characterised in that the heat transferring arrangement (22) is formed by a plurality of parallel spaced plates (34) through which the heat transfer medium flows.

20. A heat exchanger in accordance with Claim 19, characterised in that the plates (34) forming the heat transferring arrangement (22) have a wave-shaped structure (50).

21. A heat exchanger in accordance with any of the Claims 15 to 18, characterised in that the heat transferring arrangement (22) is formed by a plurality of horizontally spaced and vertically spaced conduits (54) through which the heat transfer medium flows.

22. A heat exchanger in accordance with any of the Claims 15 to 21, characterised in that the heat transfer medium is suppliable to the heat transferring arrangement (22) in the vicinity of that end of the heat transferring arrangement (22) which is remote from the jet (26), and is extractable therefrom in the vicinity of the end thereof facing the jet (26).

23. A heat exchanger in accordance with any of the Claims 15 to 22, characterised in that the heat transferring arrangement forms an absorber of an absorption-type heat pump.

24. A heat exchanger in accordance with Claim 23, characterised in that the pressure gradient across the jet (26) that is needed for atomising the solvent is producible by a thermal compressor in a solvent circulating system.

25. A heat exchanger in accordance with any of the Claims 15 to 24, characterised in that a distributor device (37) is provided in the atomisation chamber (28) for supplying the cooling medium that has condensed in the atomisation chamber (28) to the heat transferring arrangement (22) in a uniform manner.

## Revendications

1. Procédé d'échange thermique dans lequel un agent réfrigérant sous forme de vapeur est absorbé par un solvant liquide et la chaleur ainsi créée est transmise à un caloporteur par l'intermédiaire d'un agent de transfert thermique, qui ne se trouve pas en échange de matière avec l'agent réfrigérant et le solvant,
caractérisé en ce que le solvant est pulvérisé en un nébulat dans une atmosphère de vapeur d'agent réfrigérant, dans laquelle se produit une absorption par pulvérisation sensiblement adiabatique de l'agent réfrigérant par les gouttelettes du solvant, le diamètre moyen des gouttelettes dans le nébulat du solvant pulvérisé étant inférieur à environ 0,3 mm, et en ce que le nébulat du solvant pulvérisé est amené au caloporteur qui est traversé par l'agent de transfert thermique, pour le refroidissement et pour l'absorption supplémentaire de l'agent réfrigérant par le solvant.

2. Procédé d'échange thermique selon la revendication 1, caractérisé en ce que le solvant précipite sur les faces froides du caloporteur.

3. Procédé d'échange thermique selon la revendication 2, caractérisé en ce qu'il se forme un film de solvant sur les faces froides du caloporteur.

4. Procédé d'échange thermique selon l'une des revendications 1 à 3, caractérisé en ce que l'agent de transfert thermique dans le caloporteur est amené à contre- courant par rapport au flux du solvant dans le caloporteur.

5. Procédé d'échange thermique selon l'une des revendications précédentes, caractérisé en ce que le nébulat du solvant pulvérisé est une monodispersion.

6. Procédé d'échange thermique selon l'une des revendications précédentes, caractérisé en ce qu'en tant que solvant on utilise de l'eau et en tant qu'agent réfrigérant de l'ammoniac.

7. Procédé d'échange thermique selon la revendication 5 ou 6, caractérisé en ce que le diamètre moyen des gouttelettes dans le nébulat du solvant pulvérisé est inférieur à environ 0,1 mm, en particulier lorsque l'on utilise de l'eau en tant que solvant et de l'ammoniac en tant qu'agent réfrigérant.

8. Procédé d'échange thermique selon l'une des revendications précédentes, caractérisé en ce que le nébulat du solvant pulvérisé est produit dans un espace de pulvérisation qui, rapporté à la direction de gravité, se situe au-dessus du caloporteur.

9. Procédé d'échange thermique selon la revendication 8, caractérisé en ce qu'un courant d'agent réfrigérant vaporisé pour la production d'une atmosphère de vapeur d'agent réfrigérant est amené par l'espace de pulvérisation.

10. Procédé d'échange thermique selon la revendication 9, caractérisé en ce que le courant en agent réfrigérant vaporisé est amené depuis l'espace de pulvérisation vers le caloporteur.

11. Procédé d'échange thermique selon la revendication 9, caractérisé en ce que le courant en agent réfrigérant vaporisé est amené du caloporteur à l'espace de pulvérisation.

12. Procédé d'échange thermique selon la revendication 11, caractérisé en ce que le courant en agent réfrigérant vaporisé dans le caloporteur est en contre-courant par rapport au flux de solvant dans le caloporteur.

13. Procédé d'échange thermique selon l'une des revendications précédentes, caractérisé en ce que l'agent de transfert thermique est amené dans les éléments de transfert thermique du caloporteur par des méandres.

14. Procédé d'échange thermique selon la revendication 13, caractérisé en ce que l'agent de transfert thermique présente une composante d'écoulement en opposition à la direction du flux de solvant dans le caloporteur.

15. Echangeur de chaleur dans lequel un agent réfrigérant vaporisé est absorbé par un solvant liquide et la chaleur ainsi produite est évacuée par un agent de transfert thermique qui ne se trouve pas en échange de matière avec l'agent réfrigérant et le solvant, comprenant une conduite d'amenée pour le solvant (24), un caloporteur (22) qui est traversé par l'agent de transfert thermique, et une conduite d'amenée (12) pour l'agent réfrigérant, caractérisé en ce que la conduite d'amenée (24) pour le solvant débouche dans un espace de pulvérisation (28) qui, rapporté à une direction de flux de solvant, est disposé en amont du caloporteur (22), en ce que la sortie de la conduite d'amenée (24) pour le solvant comporte une tuyère (26) par laquelle le solvant peut être pulvérisé dans l'espace de pulvérisation (28) en un nébulat (30), dans lequel les gouttelettes de solvant présentent un diamètre de gouttelettes moyen avec une répartition de fréquence plus précise et en ce que pour la production d'une atmosphère de vapeur d'agent réfrigérant à un agent réfrigérant peut être amené à l'espace de pulvérisation (28).

16. Echangeur de chaleur selon la revendication 15, caractérisé en ce que la conduite d'amenée (12) d'agent réfrigérant débouche dans l'espace de pulvérisation (28).

17. Echangeur de chaleur selon la revendication 15, caractérisé en ce que la conduite d'amenée (24) pour l'agent réfrigérant débouche dans une extrémité du caloporteur (22) détournée de l'espace de pulvérisation (28).

18. Echangeur de chaleur selon l'une des revendications 15 à 17, caractérisé en ce que l'espace de pulvérisation (28), rapporté à la direction de gravité se situe au-dessus du caloporteur (22).

19. Echangeur de chaleur selon l'une des revendications 15 à 18, caractérisé en ce que le caloporteur (22) est formé par des plaques (34) disposées parallèlement selon un certain espacement et par lesquelles s'écoule le fluide de transfert thermique.

20. Echangeur de chaleur selon la revendication 19, caractérisé en ce que les plaques (34) qui forment le caloporteur (22) présente une ondulation (50).

21. Echangeur de chaleur selon l'une des revendications 15 à 18, caractérisé en ce que le caloporteur (22) est constitué de tubes (54) disposés selon une certaine distance dans la direction horizontale et selon une certaine distance dans la direction verticale qui est traversée par l'agent de transfert thermique.

22. Echangeur de chaleur selon l'une des revendications 15 à 21, caractérisé en ce que l'agent de transfert thermique peut être introduit à proximité de l'extrémité détournée de la tuyère (26) du caloporteur (22) dans le caloporteur (22) et peut être prélevé de celui-ci à proximité de l'extrémité détournée de la tuyère (26).

23. Echangeur de chaleur selon l'une des revendications 15 à 22, caractérisé en ce que l'échangeur de chaleur forme un absorbeur d'une pompe de chaleur par absorption.

24. Echangeur de chaleur selon la revendication 23, caractérisé en ce que la chute de pression nécessaire pour la pulvérisation du solvant par la tuyère (26) peut être produite dans un condenseur thermique dans un circuit de solvant.

25. Echangeur de chaleur selon l'une des revendications 15 à 24, caractérisé en ce que il est prévu dans l'espace de pulvérisation (28) un dispositif de répartition (37) pour l'amenée uniforme d'agent réfrigérant en précipitation dans l'espace de pulvérisation (28) vers le caloporteur (22).
